# EUROPÄISCHE PATENTSCHRIFT

(11) **EP 2 077 958 B1**
(45) Veröffentlichungstag und Bekanntmachung des Hinweises auf die Patenterteilung: **04.08.2010**
(21) Anmeldenummer: 07818338.1
(22) Anmeldetag: 21.09.2007
(51) Int. Cl.: B62D 1/22

(54) **NUTZFAHRZEUG MIT HYDRAULISCHER LENKANLAGE**
COMMERCIAL VEHICLE HAVING A HYDRAULIC STEERING SYSTEM
VEHICULE UTILITAIRE AVEC UN DISPOSITIF DE DIRECTION HYDRAULIQUE

(30) Priorität: 09.10.2006 DE 102006047706
(43) Veröffentlichungstag der Anmeldung: 15.07.2009
(73) Patentinhaber: Terex Demag GmbH, 66482 Zweibrücken (DE)
(72) Erfinder: JENE, Thilo, 66583 Spiesen (DE); RATHKE, Hans-Joachim, 66482 Zweibrücken (DE)
(74) Vertreter: Meissner, Peter E.
(86) Internationale Anmeldenummer: PCT/EP2007/008249
(87) Internationale Veröffentlichungsnummer: WO 2008/043428

(56) Entgegenhaltungen:
- EP-A- 0 637 536
- DE-A1- 4 031 951

## Beschreibung

### TECHNISCHES GEBIET

Die vorliegende Erfindung betrifft allgemein Nutzfahrzeuge wie beispielsweise Fahrzeug- bzw. Mobilkrane wie insbesondere Fahrzeugkrane mit Teleskopausleger, Lkw-Ladekrane, Lkw-montierte Hubarbeitsbühnen, mobile Betonpumpen etc., die auch von außerhalb einer Fahrzeugführerkabine gelenkt werden sollen und mit einer hydraulischen Lenkanlage ausgestattet sind, mittels der die Räder wenigstens einer lenkbaren Achse des Nutzfahrzeugs geschwenkt bzw. ausgelenkt werden.

Insbesondere betrifft die Erfindung ein Nutzfahrzeug, dessen hydraulische Lenkanlage entweder über eine in der Fahrzeugführerkabine befindliche, übliche Steuereinrichtung wie beispielsweise ein Lenkrad oder über eine separate zweite Steuereinrichtung zu steuern bzw. zu betätigen ist. Damit ist ein erfindungsgemäßes Nutzfahrzeug zum einen in üblicher Weise über die erste Steuereinrichtung aus der Fahrzeugführerkabine heraus lenk- bzw. steuerbar, zum anderen kann das Nutzfahrzeug alternativ mittels der zweiten Steuereinrichtung ebenfalls gelenkt werden, beispielsweise aus einer Krankabine heraus, wenn es sich bei dem Nutzfahrzeug um einen Fahrzeugkran handelt.

Schließlich betrifft die Erfindung ein Verfahren zum Lenken eines Nutzfahrzeuges mit einem hydraulischen Lenksystem, das entweder über eine in der Fahrzeugführerkabine befindliche, übliche erste Steuereinrichtung oder über eine separate zweite Steuereinrichtung zu steuern bzw. zu betätigen ist.

### HINTERGRUND DER ERFINDUNG

Nutzfahrzeuge der eingangs beschriebenen Art sind bereits bekannt. So bietet beispielsweise die Firma Liebherr-Werk Ehingen GmbH / Deutschland unter der Bezeichnung "Liebherr LTM 1045 3.1" einen Fahrzeugkran an, der auch aus der Krankabine heraus lenkbar ist. Die zweite Steuereinrichtung in der Kranführerkabine ist bei diesem Fahrzeugkran mit einem Elektromotor verbunden, der anstelle des Lenkrades in der Fahrzeugführerkabine ein an sich hinlänglich bekanntes Lenksteuerventil betätigt, um die Lenkzylinder zu betätigen und damit den Fahrzeugkran zu lenken. Diese Konstruktion ist relativ teuer.

Ein Nutzfahrzeug mit den Merkmalen des Oberbegriffs des Patentanspruchs 1 ist aus der EP-A- 0637 536 und ein Verfahren gemäß dem Oberbegriff des Patentanspruchs 12 aus der DE 4031 951 A1 bekannt.

### DARSTELLUNG DER ERFINDUNG

Gemäß einem Aspekt der vorliegenden Erfindung wird ein Nutzfahrzeug bereitgestellt, das mehrere Achsen aufweist, von denen mindestens eine lenkbar ist. Das erfindungsgemäße Nutzfahrzeug umfasst ferner eine Fahrzeugführerkabine, eine von einer Person zu betätigende erste Steuereinrichtung, die in der Fahrzeugführerkabine fest eingebaut ist und zum Steuern der mindestens einen lenkbaren Achse mit einem hydraulischen Lenksystem hydraulisch gekoppelt ist, sowie eine von einer Person zu betätigende zweite Steuereinrichtung, die ebenfalls zum Steuern der mindestens einen lenkbaren Achse mit dem hydraulischen Lenksystem hydraulisch gekoppelt ist. Über die zweite Steuereinrichtung ist das Nutzfahrzeug unabhängig von der ersten Lenkeinrichtung betätigbar. Das hydraulische Lenksystem zum Verschwenken der Räder der mindestens einen lenkbaren Achse umfasst mindestens zwei unabhängige Lenkkreise und mindestens einen Lenkzylinder für jede lenkbare Achse, von denen jeder mit wenigstens einem Lenkkreis hydraulisch verbunden ist. Ferner umfasst das Lenksystem ein Lenksteuerventil, das mit beiden Lenkkreisen gekoppelt ist und über die erste Steuereinrichtung betätigt wird. Außerdem ist ein Umschaltventil vorhanden, das derart in die Lenkanlage integriert ist, dass bei betätigtem Umschaltventil das Lenken der mindestens einen lenkbaren Achse mittels der ersten Steuereinrichtung unterbunden ist und nur noch mittels der zweiten Steuereinrichtung durchführbar ist.

Der vorliegenden Erfindung liegt der Gedanke zugrunde, erstmals in der hydraulischen Lenkanlage ein Umschaltventil vorzusehen, um ein Lenken mittels der zweiten Steuereinrichtung von außerhalb der Fahrzeugführerkabine heraus zu ermöglichen. Damit wird der bisher übliche Elektromotor, mittels dem beim Lenken aus der Kranführerkabine heraus das Betätigen des Lenksteuerventils erfolgte, überflüssig. Zudem ist die erfindungsgemäße Lenkanlage einfacher und kostengünstiger. Es erfolgt also erfindungsgemäß mittels des Umschaltventils ein Trennen der hydraulischen Lenkkreise. So können durch Schalten des Umschaltventils aus der Kranführerkabine bzw. allgemein von außerhalb der Fahrzeugführerkabine des Nutzfahrzeugs heraus, die Lenkzylinder mit Druck beaufschlagt und einem Hydraulikflüssigkeitsstrom derart versorgt werden, dass ein Lenken bzw. Steuern möglich ist.

In einer beispielhaften weiteren Ausführungsform der vorliegenden Erfindung ist das Umschaltventil als 6/3-Wegeventil ausgebildet, das neben einer Neutralstellung eine erste und eine zweite Schaltstellung einnehmen kann. In der Neutralstellung ist die hydraulische Verbindung einer Förderpumpe zu denjenigen Leitungen eines Lenkkreises unterbrochen, die ein übliches Lenksteuerventil mit den Lenkzylindern verbinden. Gleichzeitig ist aber in der Neutralstellung eine Verbindung dieser Förderpumpe mit der Einlassseite des Lenksteuerventils vorhanden. Dadurch ist ein übliches Lenken mittels der ersten Steuereinrichtung möglich. In der ersten Schaltstellung des Umschaltventils ist die Verbindung der zuvor genannten Förderpumpe zu der Einlassseite des Lenksteuerventils unterbrochen, aber eine Verbindung der Förderpumpe zu den denjenigen Leitungen des Lenkkreises geschaffen, die das Lenksteuerventil mit den Lenkzylindern verbinden. In der zweiten Schaltstellung des Umschaltventils ist die Verbindung der zuvor genannten Förderpumpe zu der Einlassseite des Lenksteuerventils ebenfalls unterbrochen, aber eine Verbindung der Förderpumpe zu den denjenigen Leitungen des Lenkkreises geschaffen, die das Lenksteuerventil mit den Lenkzylindern verbinden, jedoch sind diese Verbindungen gegenüber der ersten Schaltstellung vertauscht. Damit ist in der ersten und zweiten Schaltstellung ein Steuern bzw. Lenken in die gewünschte Richtung möglich, da in der ersten und zweiten Schaltstellung des Umschaltventils Druck in den Lenkzylindern in unterschiedliche Richtungen erzeugt werden kann.

In einer weiteren beispielhaften Ausführungsform der vorliegenden Erfindungsform sind in einen Lenkkreis ein erstes Schaltventil und ein zweites Schaltventil integriert. Dabei ist das zweite Schaltventil parallel zum ersten Schaltventil angeordnet ist, besitzt allerdings eine gegenüber dem ersten Schaltventil umgekehrte Schaltlogik. Damit wird eine Erhöhung des Sicherheitsniveaus erzielt. So führen Einfachfehler in dem Bereich des Lenksystems, das zum Lenken von außerhalb der Fahrzeugführerkabine heraus dient, nicht zu einer sicherheitskritischen Beeinflussung des normalen Lenkbetriebs, der über die erste Steuereinrichtung erfolgt. Insbesondere kann somit gewährleistet werden, dass bei bestimmten Fehlerarten keine Fehlertoleranz gegeben ist. Fehlerarten können beispielsweise elektrische Fehler wie z.B. ein Kurzschluss oder ein Spannungsabfall oder mechanische Fehler wie z.B. Leitungsbruch, gelöster Stecker, Federbruch im Ventil, Ventilklemmer sein. So kann also auch bei Auftreten von Einfachfehlern verhindert werden, dass eine sicherheitskritische Beeinflussung des Lenkbetriebs auftritt.

In einer weiteren beispielhaften Ausführungsform der vorliegenden Erfindungsform sind das erste Schaltventil und das zweite Schaltventil nur mit einem der Lenkkreise hydraulisch verbunden, was deren Aufbau vereinfacht.

In einer weiteren beispielhaften Ausführungsform der vorliegenden Erfindungsform sind das erste Schaltventil und/oder das zweite Schaltventil als elektrisch oder pneumatisch angesteuerte Ventile ausgebildet, was Kosten spart.

In einer weiteren beispielhaften Ausführungsform der vorliegenden Erfindungsform sind die Steuerventile mit denjenigen Leitungen eines Lenkkreises hydraulisch verbunden, die von dem üblichen Lenksteuerventil zu den jeweiligen Lenkzylindern führen. Dadurch ist in Kombination mit dem Umschaltventil die gewünschte Sicherheit gegenüber Einfachfehlern in einfacher und kostengünstiger Weise erzielbar.

Wie bereits zuvor angedeutet, handelt es sich in einer beispielhaften Ausführungsform der vorliegenden Erfindung bei dem Nutzfahrzeug um einen Fahrzeugkran, der als Fahrgestell einen Unterwagen umfasst, an dem ein Oberwagen mit Kranausleger und Kranführerkabine drehbar angeordnet ist. In der Kranführerkabine ist die zweite Steuereinrichtung angeordnet. Alternativ kann die zweite Steuereinrichtung auch als Draht bzw. funkferngesteuerte Fernbedienung, die in/oder außerhalb der Kranführerkabine bedienbar ist, ausgebildet sein.

In einer beispielhaften Ausführungsform der vorliegenden Erfindung handelt es sich bei der ersten Steuereinrichtung um ein in der Fahrzeugführerkabine angeordnetes Lenkrad, wie es hinlänglich bekannt ist.

Eingangs wurde bereits erwähnt, dass es sich bei der zweiten Steuereinrichtung bei einer weiteren beispielhaften Ausführungsform der vorliegenden Erfindung um eine Steuereinrichtung handelt, die sich außerhalb der Fahrzeugführerkabine befindet. Diese kann dann wie zuvor erläutert auch beispielsweise als Fernsteuereinrichtung oder Lenkrad, Steuerung, Lenkhebel oder dergleichen ausgebildet sein.

Eine weitere beispielhafte Ausführungsform der vorliegenden Erfindungsform ist dadurch gekennzeichnet, dass ein Hydraulikflüssigkeitsbehälter für Hydraulikflüssigkeit vorhanden ist, der sowohl mit ersten Lenkkreis als auch mit dem zweiten Lenkkreis verbunden ist. Dadurch wird in einfacher Weise die Versorgung der Lenkkreise der hydraulischen Lenkanlage mit Hydraulikflüssigkeit gewährleistet. Alternativ können auch für jeden Lenkkreis getrennte Hydraulikflüssigkeitsbehälters bzw. Hydraulikbehälter vorgesehen sein. Die Ausgestaltung mit einem einzigen Hydraulikflüssigkeitsbehälter für mehrere Lenkkreise senkt die Herstellungskosten und spart Platz.

Gemäß einer weiteren beispielhaften Ausführungsform der vorliegenden Erfindung ist eine erste Pumpe zum Fördern von Hydraulikflüssigkeit in dem ersten Lenkkreis integriert und eine zweite Pumpe zum Fördern von Hydraulikflüssigkeit in dem zweiten Lenkkreis integriert. Mittels dieser Pumpen wird die Förderung von Hydraulikflüssigkeiten in den jeweiligen Lenkkreisen sichergestellt. Beispielsweise können die Pumpen von einem gemeinsamen Motor angetrieben werden, es ist aber auch möglich, jede Pumpe einzeln anzutreiben. Durch die Ausbildung mit gemeinsamen Motor werden wiederum die Kosten und die Fehleranfälligkeit gesenkt.

Gemäß einem weiterem Aspekt der vorliegenden Erfindung wird ein Verfahren zum Lenken eines Nutzfahrzeuges offenbart, wobei das Nutzfahrzeug mit einem hydraulischen Lenksystem ausgestattet ist, das entweder über eine in der Fahrzeugführerkabine befindliche, übliche erste Steuereinrichtung oder über eine separate zweite Steuereinrichtung zu steuern bzw. zu betätigen ist. Erfindungsgemäß wird zum Lenken des Nutzfahrzeugs mit Hilfe der zweiten Steuereinrichtung ein Umschaltventil betätigt, das derart in das Lenksystem integriert ist, dass bei betätigtem Umschaltventil das Lenken mittels der ersten Steuereinrichtung unterbunden ist und nur noch mittels der zweiten Steuereinrichtung durchführbar ist. Daraufhin wird das Nutzfahrzeug mit der zweiten Steuereinrichtung gelenkt.

### KURZE BESCHREIBUNG DER ZEICHNUNGEN

Im Folgenden ist zur weiteren Erläuterung und zum besseren Verständnis eine beispielhafte Ausführungsform der vorliegenden Erfindung unter Bezugnahme auf die beigefügten Zeichnungen näher beschrieben und erläutert. Es zeigen:
- Fig. 1a: eine schematische Seitenansicht eines Fahrzeugkrans, der erfindungsgemäß mittels einer in der Fahrzeugführerkabine befindlichen ersten Steuereinrichtung und auch durch eine zweite Steuereinrichtung, die sich hier in einer Kranführerkabine befindet, lenk- bzw. steuerbar ist,
- Fig. 1b: eine Draufsicht des in der Fig. 1a gezeigten erfindungsgemäßen Fahrzeugkrans,
- Fig. 2: ein schematischer Schaltplan der Lenkanlage des erfindungsgemäßen Fahrzeugkrans,
- Fig. 3: eine vergrößerte Ansicht eines in der Lenkanlage gemäß der Fig. 2 enthaltenen Um- schaltventils in einer Neutralstellung,
- Fig. 4: eine vergrößerte Ansicht des in der erfindungsgemäßen Lenkanlage gemäß der Fig. 2 enthaltenen Umschaltventils in einer ersten Schaltstellung, und
- Fig. 5: eine vergrößerte Ansicht des in der erfindungsgemäßen Lenkanlage gemäß Fig. 2 ent- haltenen Umschaltventils in einer zweiten Schaltstellung.

### DETAILLIERTE BESCHREIBUNG DER BEISPIELHAFTEN AUSFÜHRUNGSFORM IN DER VORLIEGENDEN ERFINDUNG

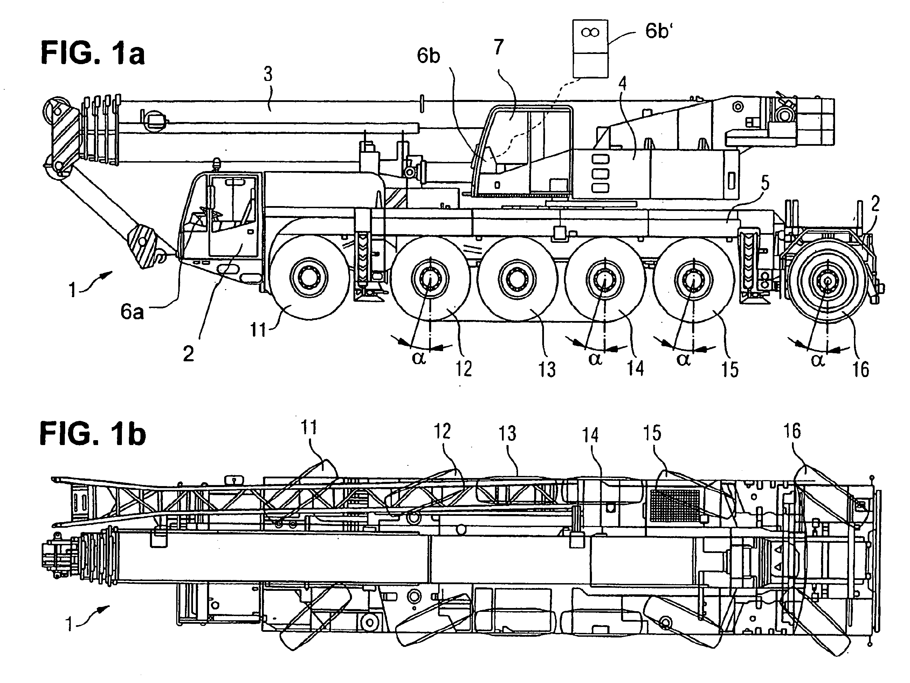

Der in der Fig. 1a in einer Seitenansicht gezeigte Fahrzeugkran 1 umfasst einen Unterwagen 5 und einen drehbar darauf angeordneten Oberwagen 4, an welchem ein teleskopierbarer Teleskopausleger 3 wippbar angebracht ist. Das Fahrzeugkran-Untergestell 5 weist im vorliegenden Fall fünf Achsen auf, von denen die ersten zwei und die letzte lenkbar sind. Der guten Ordnung halber ist noch anzumerken, dass im gezeigten Ausführungsbeispiel der Fahrzeugkran 1 noch mit einem zur Aufnahme von Gewichtsplatten dienende lösbare Modulachse 16 ausgestattet ist.

In der Draufsicht gemäß der Fig. 1b ist deutlich sichtbar, dass die Räder 11, 12, und 15 der lenkbaren Achsen ausgelenkt sind. Die Räder 13 und 14 der dritten und vierten Achse sind nicht lenkbar und dementsprechend nicht ausgelenkt. In der Fahrzeugführerkabine 7 des Untergestells 5 des Fahrzeugkrans 1 ist ein Lenkrad 6a als erste Steuereinrichtung ersichtlich, mit dem der Fahrzeugkran 1 während des normalen Fahrbetriebs auf einer Straße gelenkt bzw. gesteuert wird.

Der Oberwagen 4 umfasst ferner eine Kranführerkabine 7 auf, in der die Einrichtungen zur Steuerung des Oberwagens 4 sowie des Teleskopauslegers, also alle zum Kranbetrieb notwendigen Einrichtungen, vorhanden sind. Außerdem ist in der Kranführerkabine 7 eine Steuereinrichtung 6b vorhanden, mittels der der Fahrzeugkran 1 lenkbar ist. Im vorliegenden Fall umfasst hierzu die Steuereinrichtung einen Joystick 6b, um den Fahrzeugkran 1 nach rechts bzw. links zu steuern bzw. zu lenken. Alternativ zu dem Joystick 6b könnten auch ein oder mehrere Kipphebel vorgesehen werden. Das Gasgeben erfolgt in dieser beispielhaften Ausführungsform der Erfindung bevorzugt mittels einem Gaspedal, das in der Kranführerkabine 7 vorhanden ist. Vorzugsweise ist dabei ein grundsätzlich für den Kranbetrieb vorhandenes Pedal im Oberwagen 4 auch für das Gasgeben einsetzbar. Alternativ kann in einer weiteren beispielhaften Ausführungsform der vorliegenden Erfindung die Fahrzeuggeschwindigkeit über eine Taste eingestellt. Die Lenk- bzw. Steuereinrichtung 6b in der Kranführerkabine 7 kann alternativ auch als Lenkrad ausgebildet sein. Für alle vorgenannten Lösungen gilt, dass der Fahrzeugkran 1 aus der Kranführerkabine 7 am Oberwagen 4 heraus voll lenkbar ist. Eine weitere alternative Betätigungseinrichtung zum Lenken kann in Form von Schaltern, Druckknöpfen oder dergleichen realisiert sein.

Als Alternative zu der fest eingebauten zweiten Steuereinrichtung 6b ist eine draht- oder funkgesteuerte Steuereinrichtung 6b' schematisch dargestellt, mit der anstatt über das Lenkrad 6a der Fahrzeugkran 1 auch außerhalb von der Kranführerkabine 7 gelenkt werden kann. Hierzu weist die Fernsteuerung 6b' wiederum mehrere Tasten und Kipphebel oder dergleichen zur Lenkung des Fahrzeugkrans 1 in die gewünschte Richtung auf. Außerdem wird vorzugsweise auch eine Fahrzeuggeschwindigkeitssteuerung integriert sein.

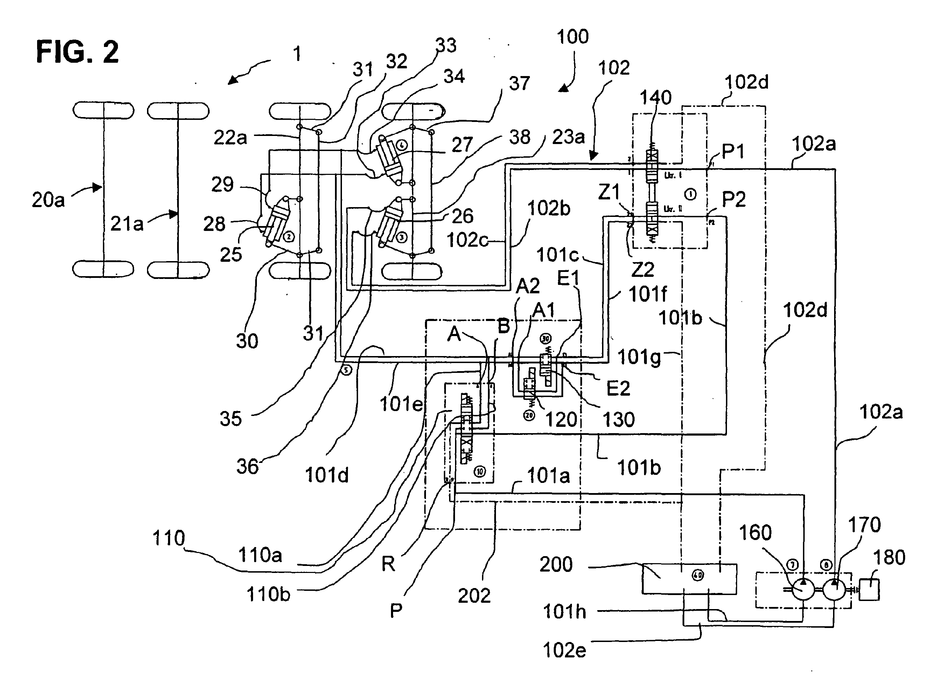

Es wird nunmehr auf die Fig. 2 Bezug genommen, in der ein schematischer Schaltplan der Lenkanlage des in den Fig. 1a und 1b gezeigten erfindungsgemäßen Fahrzeugkrans 1 dargestellt ist.

Bei dem hier gezeigten Schaltplan der Fig. 2 sind allerdings nur zwei lenkbare Achsen 22a und 23a gezeigt. Bei dem gezeigten Schaltplan sind die Achsen 20a, 21a mit den Rädern nicht lenkbar. Im Übrigen ist noch anzumerken, dass bei dem in der Fig. 2 gezeigten Schaltplan die dritte Achse 22a, die lenkbar ist, lediglich mit einem Lenkzylinder 25 versehen ist, der über ein Gestänge 30, 31, 32 nicht nur das eine Rad, sondern auch das gegenüberliegende Rad /der Achse 22a im gewünschten Lenkwinkel verschwenkt. Die weitere gelenkte Achse 23a umfasst zwei Lenkzylinder 26, 27, von denen jeweils einer einem der beiden Räder zugeordnet ist. Das Gestänge 37, 38 dient hier zur Synchronisation der Radwinkel. Wenn zwei Achsen lenkbar sind, ist es auch möglich, ein zusätzliches Gestänge (nicht gezeigt) zur Synchronisation der gelenkten Achsen vorzusehen.

Der Lenkzylinder 25, der der ersten lenkbaren Achse 22a zugeordnet ist, ist über Hydraulikanschlüsse 28, 29 sowohl mit einem ersten Lenkkreis 101 als auch einem zweiten Lenkkreis 102 verbunden. Beide Lenkkreise 101, 102 werden über Pumpen 160, 170 mit einer Hydraulikflüssigkeit wie beispielsweise Hydrauliköl gespeist. Im vorliegenden Fall sind die beiden Pumpen 160, 170 über einen gemeinsamen Motor 180 betrieben dargestellt, allerdings ist in diesem Fall aus Sicherheitsgründen ein hier zur besseren Übersichtlichkeit nicht dargestellter weiterer Lenkkreis notwendig, der dann über eine separate Pumpe, die über eine separate Antriebquelle betrieben wird, mit Hydraulikflüssigkeit versorgt wird. Angenommen, die hier gezeigte Ausführungsform einer Lenkanlage umfasst nur zwei Lenkkreise 101, 102, dann wird die Pumpe 160 des ersten Lenkkreises 101 von einer Antriebsquelle betrieben, die von der Antriebsquelle der Pumpe 170 des anderen Lenkkreises 102 unabhängig ist. Beispielsweise wird dann die Pumpe 160 von dem Motor 180 betrieben, die zweite Pumpe 170 ist dann radbetrieben.

Wie aus der schematischen Schaltplanübersicht gemäß der Fig. 2 ersichtlich, umfasst der erste Lenkkreis 101 Leitungen 101a-101h sowie die Pumpe 160 und einen Hydraulikflüssigkeitsbehälter 200. Alternativ können auch für jeden Lenkkreis separate Hydraulikflüssigkeitsbehälter vorgesehen sein. Im vorliegenden Fall wird der Behälter 200 auch für den Lenkkreis 102 benutzt. Aus dem Hydraulikflüssigkeitsbehälter 200 führt eine Absaugleitung 101h zu der Pumpe 160 des Lenkkreises 101. Von der Pumpe 160 führt eine Leitung 101a weiter zu einem Umschaltventil 110, das hier ein 6/3-Wegeventil ist. Von dem Umschaltventil 110 führt dann eine Leitung 101b zu einem an sich bekannten Lenksteuerventil 140, wie es beispielsweise unter dem Markennamen "Servocom" der ZF Antriebstechnik AG (Schweiz) vertrieben wird. Dieses Lenksteuerventil 140 ist mit der ersten Steuereinrichtung 6a, hier dem Lenkrad 6a im Führerhaus 2 des Fahrzeugkrans 1, in üblicher Weise gekoppelt ist. Von dem Lenksteuerventil 140 führt dann eine Leitung 101c des Lenkkreises 101 zu einem Schaltventil 130, das ein 4/2-Wegeventil ist. Alternativ zu dem 4/2-Wegeventil könnten auch mehrere 2/2-Wegeventile oder Sitzventile benutzt werden. Von dem Schaltventil 130 führt dann eine Leitung 101d zu einem Anschluss 34 des Lenkzylinders 27 an der gelenkten Achse 23a. Über den weiteren Anschluss 33 des Lenkzylinders 27 führt dann eine Rücklaufleitung 101e wieder zu dem Schaltventil 130. Von dem Schaltventil 130 führt eine weitere Rücklaufleitung 101f wieder zu dem Lenksteuerventil 140. Eine Rücklaufleitung 101g reicht dann von dem Schaltventil 140 in den Hydraulikflüssigkeitsbehälter 200. Damit ist der erste Lenkkreis I mit all seinen Leitungen beschrieben.

Der zweite Lenkkreis 102 umfasst eine Ansaugleitung 102e, die von dem Hydraulikflüssigkeitsbehälter 200 zu der weiteren Pumpe 170 reicht. Wie bereits erwähnt, ist die Pumpe 170 hier als über einen gemeinsamen Motor 180 mit der Pumpe 160 angetrieben dargestellt. Bei einem Zweigkreissystem müsste aber korrekterweise diese zweite Pumpe 170 von einer anderen unabhängigen Antriebsquelle angetrieben sein, üblicherweise ist oft eine radgetriebene Pumpe 170 vorgesehen. Ausdrücklich ist hier hervorzuheben, dass die Pumpe 170 in einer den Straßenverkehrszulassungsvorschriften entsprechenden Ausführungsform mit zwei Lenkkreisen 101, 102 als radgetriebene Pumpe 170 ausgebildet ist und die Pumpe 160 von dem Motor 180 angetrieben ist. Ein Leitungsstück 102a reicht von der Pumpe 170 zu dem Lenksteuerventil 140. Von dem Lenksteuerventil 140 führt ein weiteres Leitungsstück 102b zu einem Anschluss 35 des Lenkzylinders 26 der gelenkten Achse 23a. Über einen weiteren Anschluss 36 führt dann eine Rücklaufleitung 102c zurück zu dem Lenksteuerventil 140. Eine weitere Rücklaufleitung 102d führt von dem Lenksteuerventil 140 in den Hydraulikbehälter 200 zurück. Damit ist auch der zweite Hydraulikkreis 102 mit all seinen Leitungen beschrieben.

Anzumerken ist, dass der Lenkzylinder 25 der gelenkten Achse 22 a über Anschlüsse 28, 29 mit den Leitungen 101d und 101e verbunden ist und damit in den ersten Lenkkreis 101 eingebunden ist.

Wie in der Darstellung der Fig. 2 ersichtlich, ist neben dem Schaltventil 130 ein weiteres Schaltventil 120 mit den Leitungen 101c, 101d, 101e, 101f verbunden. Das Schaltventil 120 besitzt aber eine zum Schaltventil 130 umgekehrte Schaltlogik. Damit wird zum Ausdruck gebracht, dass in der in der Fig. 2 gezeigten Schaltstellung des Schaltventils 130 die Leitungen 101c und 101d über das Schaltventil 130 nicht miteinander verbunden sind. Gleiches gilt auch für die Leitungen 101e und 101 f, die über das Schaltventil 130 nicht miteinander verbunden sind. In dieser Schaltstellung des Schaltventils 130 sind die Leitungen 101c und 101d sowie 101e und 101f über das Schaltventil 120 jeweils miteinander verbunden. Die Förderung der Hydraulikflüssigkeit erfolgt also über die Leitung 101f und über das Schaltventil 120 zu den Lenkzylindern 25 und 27. Der Rückfluss der Hydraulikflüssigkeit erfolgt über die Leitungen 101e und 101f, die über das Schaltventil 120 in der gezeigten Schaltstellung miteinander verbunden sind. Der Lenkzylinder 26 wird über ein anderen Lenkkreis 102 mit Hydraulikflüssigkeit versorgt. Mit anderen Worten: Während des normalen Fahrbetriebs sind beide Schaltventile 120, 130 offen. Hierzu ist das eine Schaltventil 120 bestromt, das andere Schaltventil 130 ist unbestromt.

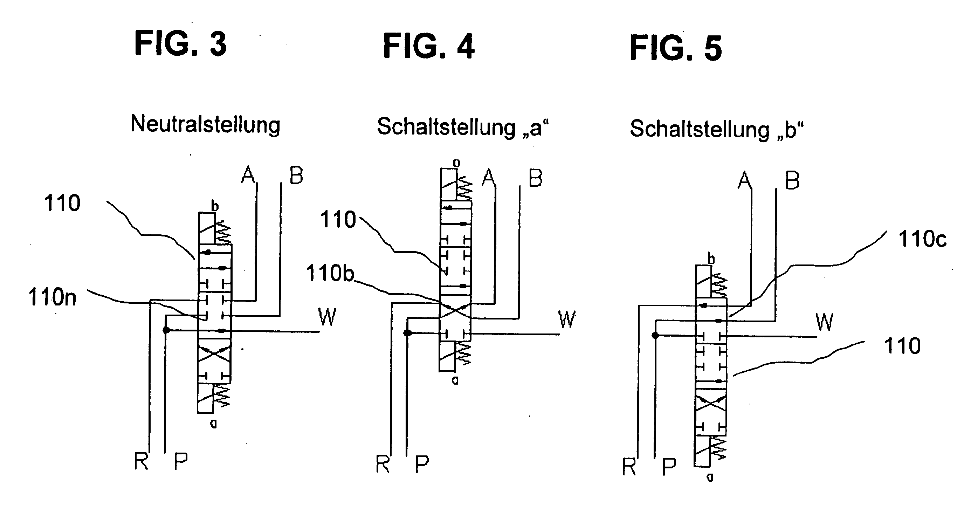

Das Umschaltventil 110 ist über Leitungen 110a und 110b mit den Leitungen 101d und 101e des ersten Lenkkreises verbunden. Außerdem ist es mit den Leitungen 101 a und 101b verbunden. Im Übrigen führt eine weitere Leitung 202 von dem Umschaltventil 110 zu der Leitung 101g bzw. in den Hydraulikflüssigkeitsbehälter 200. In Bezug auf die verschiedenen Schaltstellungen des Umschaltventils 110 wird auf die verschiedenen Darstellungen der Fig. 3-5 verwiesen.

In der Fig. 3 ist eine Neutralstellung des Umschaltventils 110 gezeigt (Umschaltabschnitt 110n). In dieser Neutralstellung ist die Leitung 101 a mit der Leitung 101b verbunden. Es wird somit Hydraulikflüssigkeit von der Pumpe 160 über die Leitung 101a in die Leitung 101b gefördert. Die Leitungen 110a und 110b sind nicht mit den Leitungen 101a bzw. 202 verbunden. Diese Neutralstellung der Umschaltventils 110 ist auch in der Fig. 2 gezeigt. Diese Neutralstellung des Umschaltventils 110 entspricht einem "normalen" Lenkbetrieb über die erste Steuereinrichtung 6a, die sich in der Fahrzeugführerkabine 2 befindet. So wird in diesem normalen Lenkbetrieb mittels der Pumpe 160 Hydraulikflüssigkeit über den Neutralumlauf des nicht betätigten Umschaltventils 110 über die Leitungen 101a, 101b zum Lenksteuerventil 140 gefördert. Je nach Lenkradeinschlag fließt die Hydraulikflüssigkeit nunmehr zum Anschluss Z1 oder Z2 des Lenksteuerventils 140 (wird auch als Lenk- oder Steuerblock bezeichnet). Angenommen, der Anschluss Z1 ist mit Druck beaufschlagt, fließt die Hydraulikflüssigkeit über die Leitung 101c zum Anschluss E1 des Schaltventils 130. Am Anschluss E1 teilt sich der Hydraulikflüssigkeitsstrom und fließt über das geschaltete Schaltventil 130 und das ungeschaltete Schaltventil 120 zum Anschluss A1. Vom Anschluss A1 fließt dann die Hydraulikflüssigkeit weiter zu den Lenkzylindern 25, 27. Mittels dieser Lenkzylinder 25, 27 verstellen sich die Räder 22, 23 proportional zum Einschlag des Lenkrades 6a in die gewünschte Richtung. Abfließendes Hydraulikflüssigkeit aus den Lenkzylindern 25, 27 fließt über den Anschluss A2 über beide Schaltventile 120, 130 zum Anschluss E2. Vom Anschluss E2 fließt die Hydraulikflüssigkeit weiter zum Anschluss Z2 des Lenksteuerventils 140 und von dort zum Hydraulikflüssigkeitsbehälter 200.

Wird nun ein Lenkbetrieb von außerhalb der Fahrzeugführerkabine 2 über die separate zweite Steuereinrichtung 6b bzw. 6b' gewünscht, so wird das Umschaltventil 110 je nach gewünschter Lenkrichtung "rechts" oder "links" in entweder die Schaltstellung "a" gemäß der Fig. 4 (Umschaltabschnitt 110a) oder der Schaltstellung "b" gemäß der Fig. 5 geschaltet (Umschaltabschnitt 110b). Angenommen, das Umschaltventil 110 ist in die Schaltstellung "a" gemäß der Fig. 4 geschaltet, so wird der Neutralumlauf zum Anschluss P2 des Lenksteuerventils 140 unterbrochen. Ebenso wird das Schaltventils 120 geschaltet und das Schaltventil 130 stromlos. Hierdurch sind nunmehr die Anschlüsse A1 und A2 von den Anschlüssen Z1 und Z2 getrennt. Entsprechend fließt Hydraulikflüssigkeit, die von der Pumpe 160 gefördert wird, über die Leitung 101a und die Leitung 110a, 101e zu den Lenkzylindern 25, 27, wodurch im dargestellten Fall eine Lenkung nach "rechts" erfolgt. Der Rücklauf der Hydraulikflüssigkeit erfolgt über die Leitung 101d und 202 in den Hydraulikflüssigkeitsbehälter.

In der in der Fig. 5 gezeigten Schaltstellung "b" ist die Leitung 101b von der Leitung 101a getrennt und somit wird der Anschluss P2 des Lenksteuerventils 140 nicht mit Hydraulikflüssigkeit versorgt. Tatsächlich wird die in der Leitung 101a durch die Pumpe 160 geförderte Hydraulikflüssigkeit über die Leitungen 110b und 101d zu den Lenkzylindern 25, 27 gefördert, wodurch im dargestellten Fall eine Lenkung nach "links" erfolgt. Der Rücklauf der Hydraulikflüssigkeit erfolgt über die Leitung 101e und 110a sowie 202 in den Hydraulikflüssigkeitsbehälter 200.

Die in der Fig. 2 gezeigte beispielhafte Anordnung der Schaltventile 120, 130 und des Umschaltventils 110 stellt sicher, dass zum einen ein Lenken bzw. Steuern des Fahrzeugkrans 1 mittels einer zweiten Steuereinrichtung 6b in einfacher Weise möglich ist, aber sogenannte Einfachfehler (nähere Angaben zu diesem Ausdruck finden sich unter dem Stichwort FMEA - Failure Mode and Effects Analysis) in dem Bereich der Lenkanlage 100, der dem Lenken des Fahrzeugkrans 1 mittels der zweiten Steuereinrichtung 6b zuzuordnen ist, nicht zu einer sicherheitskritischen Beeinflussung des Lenkbetriebs aus der Fahrzeugführerkabine 2 führt. So wird erstmals bei Auftreten von Einfachfehlern - wie insbesondere ein Kurzschluss in einem der elektrischen Schaltventile 120, 130, irgendwelche Defekte an hydraulischen Ventilen wie dem Lenksteuerventil 140 - eine sicherheitskritische Beeinflussung des Lenkbetriebs vermieden. Die Verschaltung der Schaltventile 120, 130 und des Umschaltventils 110 ist erfindungsgemäß der Art, dass ein ungewolltes Schalten des Lenksteuerventils 140 nicht zu einer sicherheitskritischen Beeinflussung des Fahrbetriebs führt.

In der in Fig. 2 gezeigten beispielhaften Ausführungsform der vorliegenden Erfindung sind die beiden Schaltventile 120, 130 jeweils in ihrer Neutralstellung gezeigt. Wird beispielsweise das Schaltventil 120 ungewollt geschaltet, so wird durch die in der Fig. 2 gezeigte beispielhafte Ausführungsform die Verbindung zwischen dem Anschluss E1 und dem Anschluss A1 sowie die Verbindung zwischen dem Anschluss E2 und dem Anschluss A2 über das geschaltete bzw. bestromte Schaltventil 130 aufrecht erhalten. Bei einer ungewollten Schaltung des sich in Neutralstellung befindenden Schaltventils 130 ist die Verbindung zwischen dem Anschluss E1 und Anschluss A1 und die Verbindung E2 und dem Anschluss A2 über das Schaltventil 130 unterbrochen. Die Hydraulikflüssigkeitversorgung vom Anschluss E1 zum Anschluss A1 und vom Anschluss E2 nach Anschluss A2 wird über das Schaltventil 120 aufrechterhalten.

Bei einer ungewollten Schaltung des Umschaltventils 110 wird die Hydraulikflüssigkeitversorgung des Anschlusses P2 unterbrochen. Dadurch fällt der Lenkkreis 101 aus. Die Hydraulikflüssigkeit fließt von der Pumpe 160 über das Schaltventil 110 zum exemplarisch betrachteten Anschluss A. Damit ist der Lenkkreis 102 nach wie vor voll funktionsfähig.

Wird nun gemäß einem ersten Szenario I angenommen, dass keine Lenkradbewegungen des Fahrers durchgeführt wird, so fließt Hydraulikflüssigkeit des Lenkkreises 102 über die Neutralstellung des Lenksteuerventils 140 zum Hydraulikflüssigkeitsbehälter 200. Von der Pumpe 160 geförderte Hydraulikflüssigkeit fließt über das fehlerhaft geschaltete Umschaltventil 110 zum Anschluss A. Vom Anschluss A fließt die Hydraulikflüssigkeit über die Schaltventile 120 und 130 zum Anschluss E2 und von dort über den Anschluss Z2 zum Hydraulikflüssigkeitsbehälter 200. Die Lenkzylinder 25, 27 und 26 werden nicht druckbeaufschlagt und somit kommt es zu keiner fehlerhaften Lenkbewegung des Fahrzeugs.

Nimmt man ein zweites Szenario II an, bei dem ein Lenkradeinschlag des Fahrers erfolgt, der mit dem Wunsch einhergeht, am Anschluss Z1 Druck zu erzeugen (also ein Lenkvorgang nach "links" gewünscht wird), so ist bei der erfindungsgemäßen Schaltung der Anschluss Z1 über die Anschlüsse E1, A1 und B mit den Lenkzylindern 25, 26, 27 verbunden. Der Anschluss Z2 ist mit dem Hydraulikflüssigkeitsbehälter 200 verbunden. Der Anschluss Z1 ist über das Lenksteuerventil 140 mit dem Anschluss P2 verbunden, allerdings ist der Anschluss P2 nicht mit Hydraulikflüssigkeit versorgt. Die Hydraulikflüssigkeit fließt von der Pumpe 160 gefördert über das fehlerhaft geschaltete Schaltventil 110 zum Anschluss A. Die Hydraulikflüssigkeit fließt ferner von der Pumpe 160 gefördert über die Anschlüsse A, A2, E2, Z2 zum Hydraulikflüssigkeitsbehälter 200 hin ab. Die Gegenseiten der Lenkzylinder 25. 26, 27 sind hierbei über den Anschluss B des Umschaltventils 110 mit dem Hydraulikflüssigkeitsbehälter 200 verbunden. Damit lenkt das Fahrzeug in die gewünschte Richtung ein. Das Fahrzeug lenkt mit nur einem Lenkkreis. Nach dem Loslassen des Lenkrades 6a fließt die Hydraulikflüssigkeit wieder wie im Szenario I beschrieben.

Ein weiteres Szenario III besteht darin, dass ein Lenkradeinschlag des Fahrers gewünscht wird, der mit dem Wunsch einhergeht, am Anschluss Z2 Druck zu erzeugen (also ein Lenkvorgang nach "rechts" gewünscht wird). Dabei ist der Anschluss Z2 über das Lenksteuerventil 140 mit dem Anschluss P2 verbunden und der Anschluss Z1 ist mit dem Hydraulikflüssigkeitsbehälter 200 verbunden, jedoch ist der Anschluss P2 ohne Hydraulikflüssigkeitsversorgung. Die von der Pumpe 160 geförderte Hydraulikflüssigkeit fließt über das fehlerhaft geschaltete Umschaltventil 110 zum Anschluss A. Die Hydraulikflüssigkeit fließt dabei über den Anschluss A zu den Lenkzylindern 25, 26, 27. Die Anschlüsse A2, E2, Z2 sind über den Anschluss P2 verschlossen. Die Gegenseiten der Lenkzylinder 25, 26, 27 sind über den Anschluss B des Umschaltventils 110 und den Anschluss Z1 des Lenksteuerventils 140 mit dem Hydraulikflüssigkeitsbehälter 200 verbunden. Damit lenkt das Fahrzeug in die gewünschte Richtung ein. Hier lenkt das Fahrzeug mit beiden Lenkkreisen 101, 102. Nach dem Loslassen des Lenkkreises 6a fließt die Hydraulikflüssigkeit wieder wie im Eingangs beschriebenem Szenario I.

Der guten Ordnung halber ist noch anzumerken, dass bei einer weiteren erfindungsgemäßen beispielhaften Ausführungsform der vorliegenden Erfindung das Umschaltventil 110 als Proportionalventil ausgeführt sein kann. Dann verhalten sich die zuvor beschriebenen Szenarios I-III wie oben beschrieben, jedoch kann je nach Zustand des Umschaltventils 110 eine Teilversorgung des zweiten Lenkkreises zusätzlich vorhanden sein.

Entsprechend einer beispielhaften Ausführungsform der vorliegenden Erfindung kommt es bei keinem Fehlerszenario I-III eines einzelnen auftretenden Fehlers zu ungewollten Lenkbewegungen oder zu einem Ausbleiben gewollter Lenkbewegungen. Das erfindungsgemäße Lenksystem zum Lenken von außerhalb der Fahrzeugführerkabine 2 ist dementsprechend tolerant gegenüber allen auftretenden Einzelfehlem.

## Patentansprüche

1. Nutzfahrzeug mit:
- mehreren Achsen (20a, 21a, 22a, 23a), von den mindestens eine (22a, 23a) lenkbar ist,
- einer Fahrzeugführerkabine (2),
- einer von einer Person zu betätigenden ersten Steuereinrichtung (6a), die in der Fahrzeugführerkabine (2) fest eingebaut ist und zum Steuern der mindestens einen lenkbaren Achse (22a, 23a) mit einem hydraulischen Lenksystem (100) gekoppelt ist,
- einer von einer Person zu betätigenden zweiten Steuereinrichtung (6b), die ebenfalls zum Steuern der mindestens einen lenkbaren Achse (22a, 23a) mit dem hydraulischen Lenksystem (100) gekoppelt ist, wobei die zweite Steuereinrichtung (6b) unabhängig von der ersten Steuereinrichtung (6a) betätigbar ist.
- einem hydraulischen Lenksystem (100) zum Verschwenken der Räder (22, 23) der mindestens einen lenkbaren Achse (22a, 22b), wobei das hydraulische Lenksystem (100) umfasst:
a) mindestens zwei unabhängige Lenkkreise (101, 102),
b) mindestens einen Lenkzylinder (25, 26, 27) für jede lenkbare Achse (22a, 23a), wobei jeder Lenkzylinder (25, 26, 27) mit den Lenkkreisen (101, 102) hydraulisch verbunden ist,
c) ein Lenksteuerventil (140), das mit beiden Lenkkreisen (101, 102) hydraulisch gekoppelt ist und über die erste Steuereinrichtung (6a) betätigt wird, und
**dadurch gekennzeichnet, dass**
d) ein Umschaltventil (110), das derart in das Lenksystem (100) integriert ist, dass bei betätigtem Umschaltventil (110) das Lenken der mindestens einen lenkbaren Achse (22a, 22b) mittels der ersten Steuereinrichtung (6a) unterbunden ist und nur noch mittels der zweiten Steuereinrichtung (6b) durchführbar ist.

2. Nutzfahrzeug nach Anspruch 1, **dadurch gekennzeichnet, dass** das Umschaltventil (110) ein 6/3-Wegeventil oder ein Proportionalventil ist und sowohl mit dem ersten als auch dem zweiten Lenkkreis (101, 102) hydraulisch verbunden ist.

3. Nutzfahrzeug nach Anspruch 1 oder 2, **dadurch gekennzeichnet, dass** ein erstes
Schaltventil (120) und ein zweites Schaltventil (130) in das hydraulische Lenksystem (100) integriert sind, wobei das zweite Schaltventil (130) parallel zum ersten Schaltventil (120) angeordnet ist und eine gegenüber dem ersten Schaltventil (120) umgekehrte Schaltlogik besitzt.

4. Nutzfahrzeug nach Anspruch 3, **dadurch gekennzeichnet, dass** das erste Schaltventil (120) und das zweite Schaltventil (130) in demselben Lenkkreise (101) hydraulisch integriert sind.

5. Nutzfahrzeug nach Anspruch 3 oder 4, **dadurch gekennzeichnet, dass** das erste Schaltventil (120) ein 4/2-Wegeventil oder ein Sitzventil ist oder aus mehreren 2/2-Wegeventilen besteht und das zweite Schaltventil (130) ein 4/2-Wegeventil oder ein Sitzventil ist oder aus mehreren 2/2-Wegeventilen besteht.

6. Nutzfahrzeug nach einem der voranstehenden Ansprüche, **dadurch gekennzeichnet, dass** das Nutzfahrzeug ein Fahrzeugkran (1) ist, der einen Unterwagen (5) umfasst, auf dem ein Oberwagen (4) mit Kranausleger (3) und Kranführerkabine (7) drehbar angeordnet ist und die erste Steuereinrichtung (6a) sich in der Fahrzeugführerkabine (2) befindet und die zweite Steuereinrichtung (6b) in der Kranführerkabine (7) angeordnet ist.

7. Nutzfahrzeug nach einem der voranstehenden Ansprüche, **dadurch gekennzeichnet, dass** die erste Steuereinrichtung ein in der Fahrzeugführerkabine (2) angeordnetes Lenkrad (6a) umfasst.

8. Nutzfahrzeug nach einem der voranstehenden Ansprüche, **dadurch gekennzeichnet, dass** sich die zweite Steuereinrichtung (6b) außerhalb der Fahrzeugführerkabine (2) befindet.

9. Nutzfahrzeug nach einem der voranstehenden Ansprüche, **dadurch gekennzeichnet, dass** die zweite Steuereinrichtung eine Fernsteuereinrichtung (6b') umfasst.

10. Nutzfahrzeug nach einem der voranstehenden Ansprüche, **dadurch gekennzeichnet, dass** ein Hydraulikflüssigkeitsbehälter (200) für Hydraulikflüssigkeit vorhanden ist, der sowohl mit dem ersten Lenkkreis (101) als auch dem zweiten Lenkkreis (102) verbunden ist.

11. Nutzfahrzeug nach einem der voranstehenden Ansprüche, **dadurch gekennzeichnet, dass** eine erste Pumpe (160) zum Fördern von Hydraulikflüssigkeit in dem ersten Lenkkreis (101) integriert ist und eine zweite Pumpe (170) zum Fördern von Hydraulikflüssigkeit in dem zweiten Lenkkreis (102) integriert ist.

12. Verfahren zum Lenken eines Nutzfahrzeuges, das mit einem hydraulischen Lenksystem (100) ausgestattet ist, die entweder über eine in der Fahrzeugführerkabine (2) befindliche, übliche erste Steuereinrichtung (6a) oder über eine separate zweite Steuereinrichtung (6b) zu steuern bzw. zu betätigen ist, mit wenigstens folgenden Verfahrensschritten:
- Lenken des Nutzfahrzeugs mit Hilfe der ersten Steuereinrichtung (6a),
- Betätigen eines Umschaltventils (110),das in das Lenksystem (100) integriert ist, **dadurch gekennzeichnet,**
**dass** bei betätigtem Umschaltventil (110) das Lenken mittels der ersten Steuereinrichtung (6a) unterbunden ist und nur noch mittels der zweiten Steuereinrichtung (6b) durchführbar ist,
- Lenken des Nutzfahrzeugs mit Hilfe der zweiten Steuereinrichtung (6b).

## Claims

1. A utility vehicle with:
- a plurality of axles (20a, 21a, 22a, 23a), at least one (22a, 23a) of which is steerable,
- a vehicle driver's cab (2),
- a first control means (6a) actuated by a person, which is securely installed in the vehicle driver's cab (2) and for controlling the at least one steerable axle (22a, 23a) is coupled to a hydraulic steering system (100),
- a second control means (6b) actuated by a person, which, for steering the at least one steerable axle (22a, 23a), is likewise coupled to the hydraulic steering system (100), the second control means (6b) being able to be actuated independently of the first control means (6a),
- a hydraulic steering system (100) for pivoting the wheels (22, 23) of the at least one steerable axle (22a, 22b), the hydraulic steering system (100) comprising:
a) at least two independent steering circuits (101, 102),
b) at least one steering cylinder (25, 26, 27) for each steerable axle (22a, 23a), each steering cylinder (25, 26, 27) being hydraulically connected to the steering circuits (101, 102),
c) a steering control valve (140) which is hydraulically coupled to both steering circuits (101, 102) and is actuated via the first control means (6a), and
**characterised in that**
d) a switching valve (110) which is integrated in the steering system (100) such that when the switching valve (110) is actuated the steering of the at least one steerable axle (22a, 22b) by means of the first control means (6a) is prevented and can then only be carried out by means of the second control means (6b).

2. A utility vehicle according to Claim 1, **characterised in that** the switching valve (110) is a 6/3-way valve or a proportioning valve and is hydraulically connected both to the first and to the second steering circuit (101, 102).

3. A utility vehicle according to Claim 1 or 2, **characterised in that** a first switching valve (120) and a second switching valve (130) are integrated in the hydraulic steering system (100), the second switching valve (130) being arranged parallel to the first switching valve (120) and having a reversed switching logic compared with the first switching valve (120).

4. A utility vehicle according to Claim 3, **characterised in that** the first switching valve (120) and the second switching valve (130) are hydraulically integrated in the same steering circuits (101).

5. A utility vehicle according to Claim 3 or 4, **characterised in that** the first switching valve (120) is a 4/2-way valve or a seat valve, or consists of a plurality of 2/2-way valves, and the second switching valve (130) is a 4/2-way valve or a seat valve or consists of a plurality of 2/2-way valves.

6. A utility vehicle according to one of the preceding claims, **characterised in that** the utility vehicle is a mobile crane (1) which comprises an undercarriage (5) on which a superstructure (4) with crane jib (3) and crane operator's cab (7) is rotatably arranged and the first control means (6a) is located in the vehicle driver's cab (2) and the second control means (6b) is arranged in the crane operator's cab (7).

7. A utility vehicle according to one of the preceding claims, **characterised in that** the first control means comprises a steering wheel (6a) arranged in the vehicle driver's cab (2).

8. A utility vehicle according to one of the preceding claims, **characterised in that** the second control means (6b) is arranged outside the vehicle driver's cab (2).

9. A utility vehicle according to one of the preceding claims, **characterised in that** the second control means comprises a remote control means (6b').

10. A utility vehicle according to one of the preceding claims, **characterised in that** a hydraulic fluid reservoir (200) for hydraulic fluid is present which is connected both to the first steering circuit (101) and to the second steering circuit (102).

11. A utility vehicle according to one of the preceding claims, **characterised in that** a first pump (160) for delivering hydraulic fluid is integrated in the first steering circuit (101) and a second pump (170) for delivering hydraulic fluid is integrated in the second steering circuit (102).

12. A method for steering a utility vehicle which is equipped with a hydraulic steering system (100), which can be controlled or actuated either by means of a conventional first control means (6a) located in the vehicle driver's cab (2) or via a separate second control means (6b), with at least the following method steps:
- steering of the utility vehicle with the aid of the first control means (6a),
- actuation of a switching valve (110) which is integrated in the steering system (100),
**characterised in that**
when the switching valve (110) is actuated the steering by means of the first control means (6a) is prevented and can then only be carried out by means of the second control means (6b),
- steering of the utility vehicle with the aid of the second control means (6b).

## Revendications

1. Véhicule utilitaire, comprenant :
- plusieurs essieux (20a, 21a, 22a, 23a), dont au moins un (22a, 23a) est orientable,
- une cabine de conduite du véhicule (2),
- un premier dispositif de commande (6) à actionner par une personne, qui est intégré de manière fixe à la cabine de conduite du véhicule (2) et qui, pour commander le au moins un essieu orientable (22a, 23a), est couplé à un système de direction hydraulique (100),
- un second système de commande (6b) à actionner par une personne qui, également dans le but de commander le au moins un axe orientable (22a, 23a), est couplé au système de direction hydraulique (100), le second dispositif de commande (6b) pouvant être actionné indépendamment du premier dispositif de commande (6a),
- un second système de direction hydraulique (100) permettant de faire pivoter les roues (22, 23) du au moins un essieu orientable (22a, 22b), dans lequel le système de direction hydraulique (100) comprend :
a) au moins deux circuits de direction indépendants (101, 102),
b) au moins un cylindre de direction (25, 26, 27) pour chaque essieu orientable (22a, 23a), chaque cylindre de direction (25, 26, 27) étant relié par voie hydraulique aux circuits de direction (101, 102),
c) une soupape de commande de direction (140), qui est couplée par voie hydraulique aux deux circuits de direction (101, 102) et par le biais de laquelle est actionné le premier dispositif de commande (6a), et
**caractérisé en ce que**
d) une soupape de commutation (110) est intégrée au système de direction (100) de sorte que lorsque la soupape de commutation (110) est actionnée, l'orientation du au moins un essieu orientable (22a, 22b) soit empêché au moyen du premier dispositif de commande (6a) et ne soit encore réalisable qu'au moyen du second dispositif de commande (6b).

2. Véhicule utilitaire selon la revendication 1, **caractérisé en ce que** la soupape de commutation (110) est un distributeur à 6/3 orifices ou une soupape proportionnelle et est reliée non seulement au premier, mais également au second circuit de direction (101, 102) par voie hydraulique.

3. Véhicule utilitaire selon la revendication 1 ou 2, **caractérisé en ce qu'**une première soupape de commande (120) et une seconde soupape de commande (130) sont intégrées au système de direction hydraulique (100), dans lequel la seconde soupape de commande (130) est agencée parallèlement à la première soupape de commande (120) et possède un circuit logique inversé par rapport à la première soupape de commande (120).

4. Véhicule utilitaire selon la revendication 3, **caractérisé en ce que** la première soupape de commande (120) et la seconde soupape de commande (130) sont intégrées par voie hydraulique au même circuit de direction (101).

5. Véhicule utilitaire selon la revendication 3 ou 4, **caractérisé en ce que** la première soupape de commande (120) est un distributeur à 4/2 orifices ou une soupape à siège ou est constituée de plusieurs distributeurs à 2/2 orifices, et la seconde soupape de commande (130) est un distributeur à 4/2 orifices ou une soupape à siège ou est constituée de plusieurs distributeurs à 2/2 orifices.

6. Véhicule utilitaire selon l'une quelconque des revendications précédentes, **caractérisé en ce que** le véhicule utilitaire est une grue mobile (1), qui comprend un châssis (5), sur lequel un châssis tournant (4) avec une flèche de grue (3) et une cabine de pilotage de grue (7) est agencé à rotation, et le premier dispositif de commande (6a) se trouve dans la cabine de conduite du véhicule (2) et le second dispositif de commande (6b) est agencé dans la cabine de pilotage de grue (7).

7. Véhicule utilitaire selon l'une quelconque des revendications précédentes, **caractérisé en ce que** le premier dispositif de commande comprend un volant (6a) aménagé dans la cabine de conduite du véhicule (2).

8. Véhicule utilitaire selon l'une quelconque des revendications précédentes, **caractérisé en ce que** le second dispositif de commande (6b) est situé à l'extérieur de la cabine de conduite du véhicule (2).

9. Véhicule utilitaire selon l'une quelconque des revendications précédentes, **caractérisé en ce que** le second dispositif de commande comprend un dispositif de commande à distance (6b').

10. Véhicule utilitaire selon l'une quelconque des revendications précédentes, **caractérisé en ce qu'**un récipient de fluide hydraulique (200) est présent pour du fluide hydraulique, lequel est relié non seulement au premier circuit de direction (101) mais également au second circuit de direction (102).

11. Véhicule utilitaire selon l'une quelconque des revendications précédentes, **caractérisé en ce qu'**une première pompe (160) prévue pour le transport du fluide hydraulique est intégrée au premier circuit de direction (101) et une seconde pompe (170) prévue pour le transport du fluide hydraulique est intégrée au second circuit de direction (102).

12. Dispositif pour diriger un véhicule utilitaire, qui est équipé d'un système de direction hydraulique (100), qui est à commander ou à actionner par le biais d'un premier dispositif de commande (6a) courant situé dans la cabine de conduite du véhicule (2) ou par le biais d'un second dispositif de commande (6b) séparé, comprenant au moins les étapes de procédé suivantes consistant à :
- diriger le véhicule utilitaire à l'aide du premier dispositif de commande (6a),
- actionner une soupape de commutation (110) qui est intégrée au système de direction (100), **caractérisé en ce que** lorsque la soupape de commutation (110) est actionnée, l'orientation au moyen du premier dispositif de commande (6a) est empêché et n'est encore réalisable qu'au moyen du second dispositif de commande (6b),
- diriger le véhicule utilitaire à l'aide du second dispositif de commande (6b).
